# EUROPÄISCHE PATENTANMELDUNG

(11) **EP 1 379 095 A1**
(43) Veröffentlichungstag der Anmeldung: **07.01.2004**
(21) Anmeldenummer: 02014722.9
(22) Anmeldetag: 03.07.2002
(51) Int. Cl.: H04Q 7/38

(54) **Verfahren zur Steuerung einer Datenübertragung in einem Funk-Kommunikationssystem mit hierarchischer Netzarchitektur**

(71) Anmelder: SIEMENS AKTIENGESELLSCHAFT, 80333 München (DE)
(72) Erfinder: Kroth, Norbert, 14471 Potsdam (DE); Schniedenharn, Joerg, 13587 Berlin (DE)

(57) **Zusammenfassung**

Beschrieben wird eine Möglichkeit zur Steuerung einer Übertragung von Daten in einem Funk-Kommunikationssystem mit einer hierarchischen Netzarchitektur. Eine Einrichtung (NodeB 1, NodeB 2) niederer Hierarchie überträgt eine lastbasierte Signalisierung (CLR) an eine Einrichtung (CRNC) höherer Hierarchie und die Einrichtung (CRNC) höherer Hierarchie führt basierend auf der lastbasierten Signalisierung (CLR) eine Steuerung (RA) von Übertragungskapazitäten der Einrichtung (NodeB 1, NodeB 2) niederer Hierarchie durch.

## Beschreibung

Die vorliegende Erfindung betrifft ein Verfahren zur Steuerung einer Übertragung von Daten in einem Funk-Kommunikationssystem mit einer hierarchischen Netzarchitektur und Endgeräten. Das gesamte Funk-Kommunikationssystem setzt sich also aus zwei grundsätzlichen Komponenten zusammen. Einerseits sind Endgeräte vorgesehen, die Ausgangspunkt oder Endpunkt von Datenverbindungen in dem Funk-Kommunikationssystem sind. Die Endgeräte können als stationäre, ortsfeste Endgeräte oder auch als mobile Endgeräte ausgebildet sein. Andererseits ist eine Netzarchitektur aus hierarchisch aufgebauten Netz-Einrichtungen vorgesehen, die über eine Funkschnittstelle mit den Endgeräten im Datenaustausch steht. Die Einrichtungen der hierarchischen Netzarchitektur können ebenfalls als stationäre, ortsfeste Einrichtungen oder auch als mobile Einrichtungen ausgebildet sein. Es können sogar Funk-Kommunikationssysteme vorgesehen werden, in denen Einrichtungen sowohl als Endgeräte als auch als Einrichtungen der hierarchischen Netzarchitektur agieren können, beispielsweise im Fall dezentraler Ad-Hoc-Netze.

Eine solche hierarchische Netzarchitektur bedeutet, dass die Netzarchitektur Einrichtungen unterschiedlicher Hierarchieebenen aufweist, wobei Einrichtungen höherer Hierarchie gewisse Steuerungs- und Kontrollaufgaben über Einrichtungen niedrigerer Hierarchie zugewiesen sind. Es können in solchen Funk-Kommunikationssystemen grundsätzlich alle Arten von Datenübertragungen vorgesehen sein, d.h. Signalisierungsdaten oder Nutzdaten wie Sprachdaten, Multimediadaten oder ähnliches, beispielsweise die Übertragung von Paketdaten.

Aus dem Stand der Technik sind Funk-Kommunikationssysteme mit hierarchischer Netzarchitektur hinreichend bekannt. So beschreibt beispielsweise die US 2002/0021692 ein mobiles Telekommunikationssystem, welches zur Paketdatenübertragung ausgelegt ist. Es wird dabei insbesondere ein Verfahren zur Paketdatenübertragung mit hohen Datenraten (High Date Rate HDR) beschrieben, wie es im Rahmen der 3rd Generation Partnership Project 2 Organisation (3GPP2) standardisiert wird. Dort wird insbesondere die Steuerung der Paketdatenübertragung zwischen einem Access Network (AN) und einem Access Terminal (AT) beschrieben, die in Abhängigkeit von einer Signalisierung auf einem Reverse Link zwischen dem Access Terminal (AT) und dem Access Network (AN) erfolgt, also in Abhängigkeit von einer Signalisierung auf der Luftschnittstelle. Es soll im Rahmen dieses Dokuments speziell die Last auf dem Reverse Link, d.h. zwischen einer hierarchischen Netzarchitektur und einem Endgerät, optimiert werden.

Aufgabe der vorliegenden Erfindung ist es daher, eine Möglichkeit zur Optimierung der Steuerung einer Übertragung von Daten in einem Funk-Kommunikationssystem mit einer hierarchischen Netzarchitektur und Endgeräten bereitzustellen. Diese Aufgabe wird gelöst durch die Merkmale der unabhängigen Patentansprüche gelöst. Weiterbildungen der Erfindung sind den abhängigen Patentansprüchen entnehmbar.

Die Erfindung umfasst ein Verfahren zur Steuerung einer Übertragung von Daten in einem Funk-Kommunikationssystem mit einer hierarchischen Netzarchitektur und Endgeräten. Gemäß der Erfindung ist nun vorgesehen, dass eine Einrichtung niederer Hierarchie der hierarchischen Netzarchitektur eine lastbasierte Signalisierung an eine Einrichtung höherer Hierarchie der hierarchischen Netzarchitektur überträgt und die Einrichtung höherer Hierarchie basierend auf der lastbasierten Signalisierung eine Steuerung von Übertragungskapazitäten der Einrichtung niederer Hierarchie durchführt. Es erhält auf diese Weise also die Einrichtung höherer Hierarchie Informationen, die darauf basieren, welche Datenlast an einer entsprechenden Einrichtung niedrigerer Hierarchie vorliegt. Die Einrichtung höherer Hierarchie kann dann die Kontrolle und/oder Steuerung der Einrichtung niedrigerer Hierarchie, speziell die Steuerung von Übertragungskapazitäten der Einrichtung niedrigerer Hierarchie, auf Basis dieser Informationen anpassen. Dieses Verfahren ist also insbesondere für solche Funk-Kommunikationssysteme vorteilhaft, in denen die Standardsignalisierung zwischen den unterschiedlichen Hierarchieebenen so ausgelegt ist, dass die Einrichtungen höherer Hierarchie nur eingeschränkte oder keine Kenntnis über Betriebsverhältnisse an Einrichtungen niedrigerer Hierarchie besitzen, speziell über solche Betriebsverhältnisse, die in gewissem Zusammenhang mit der Datenlast an der entsprechenden Einrichtung niederer Hierarchie stehen.

Eine Weiterbildung der vorliegenden Erfindung sieht vor, dass als lastbasierte Signalisierung speziell Informationen über die Lastzustände für den von der Einrichtung niederer Hierarchie versorgten Bereich des Funk-Kommunikationssystems übertragen werden. Es werden in diesem Spezialfall also solche Informationen übertragen, die direkt Aussagen über die Lastzustände an der Einrichtung niederer Hierarchie beinhalten. Damit liegt dann an der Einrichtung höherer Hierarchie eine direkte Kenntnis über diese Lastzustände an der Einrichtung niederer Hierarchie vor.

Es kann insbesondere vorgesehen werde, dass als Informationen über die Lastzustände zeitlich gemittelte Lastwerte für definierte Betriebsparameter und/oder Signalisierungsarten des Funk-Kommunikationssystems für Funk-Verbindungen zwischen einer Einrichtung niedrigster Hierarchie und Endgeräten übertragen werden. Solche definierten Betriebsparameter und/oder Signalisierungsarten können beispielsweise die durchschnittliche Nutzung physikalischer Übertragungskapazitäten, die durchschnittliche Verwendung gewisser Modulationsarten, die durchschnittliche Anzahl der Aussendungen ausgewählter Signalisierungen, die durchschnittliche Belegung von Daten-Zwischenspeichern etc. sein. Durch die zeitliche Mittelung wird gerade für Fälle sich zeitlich signifikant ändernder Lastwerte sichergestellt, dass nicht nur ein einmalig und kurzzeitig ermittelter Lastwert die weiteren Abläufe im Funk-Kommunikationssystem beeinflusst.

Die lastbasierte Signalisierung kann dazu verwendet werden, vielfältige Abläufe innerhalb des hierarchischen Funk-Kommunikationssystems zu optimieren. Es könnte beispielsweise auch vorgesehen werden, dass einzelne Einrichtungen gleicher Hierarchie untereinander Informationen über die entsprechende lastbasierte Signalisierung austauschen, so dass indirekt auch Einrichtungen höherer Hierarchie lastbasierte Signalisierungsinformationen von Einrichtungen niederer Hierarchie erhalten, die ihnen nicht direkt zugeordnet sind.

Die lastbasierte Signalisierung verschafft Einrichtungen höherer Hierarchie insbesondere eine Kenntnis über die Auslastungssituation und Lastverteilung an zugeordneten Einrichtungen niederer Hierarchie. Es kann dann beispielsweise durch eine Einrichtung höherer Hierarchie eine Optimierung bzw. Angleichung der Auslastungssituation an einzelnen zugeordneten Einrichtungen niederer Hierarchie eingeleitet werden. So kann insbesondere vorgesehen werden, dass auf Basis der lastbasierten Signalisierung eine Überprüfung einer Zuordnung von Endgeräten zu bestimmten Einrichtungen niedrigster Hierarchie erfolgt. Da nach der Erfindung eine Einrichtung höherer Hierarchie einen Überblick über die Auslastungssituation an den zugeordneten Einrichtungen niedrigerer Hierarchie besitzt, kann die Einrichtung höherer Hierarchie zumindest Vorschläge für eine geänderte Zuordnung von Endgeräten zu bestimmten Einrichtungen niederer Hierarchie machen, oder die Einrichtung höherer Hierarchie kann eine geänderte Zuordnung von Endgeräten zu bestimmten Einrichtungen niederer Hierarchie unmittelbar initiieren.

Einer speziellen Weiterbildung des gerade beschriebenen Verfahrens kann realisiert werden, wenn als Funk-Kommunikationssystem ein zellulares Funk-Kommunikationssystem vorgesehen ist. Es kann dann auf Basis der lastbasierten Signalisierung eine Prüfung einer Verbindungsweiterschaltungs-Möglichkeit (Handover) für mindestens ein Endgerät von einer ersten Zelle des Funk-Netzes in eine zweite Zelle des Funk-Kommunikationssystems erfolgen. Die Verfahren zur anschließenden Durchführung eines solcher Handovers für Endgeräte in einem zellularen Funk-Kommunikationssystem sind aus dem Stand der Technik grundsätzlich hinreichend bekannt und müssen an dieser Stelle nicht weiter ausgeführt werden.

Die lastbasierte Signalisierung kann in Abhängigkeit von verschiedenen Ereignissen von Einrichtungen niedrigerer Hierarchie an Einrichtungen höherer Hierarchie übertragen werden. So kann beispielsweise vorgesehen werden, dass die lastbasierte Signalisierung in Abhängigkeit von bestimmten Zeitereignissen übertragen wird. Als solche Zeitereignisse können entweder diskrete, definierte Zeitpunkte festgelegt werden oder es kann der Ablauf definierter Zeitintervalle als Zeitereignis definiert werden. Als ein spezieller Fall kann vorgesehen werden, dass die lastbasierte Signalisierung periodisch übertragen wird, also jeweils nach Ablauf aufeinanderfolgender, identischer Zeitintervalle.

Alternativ kann aber auch vorgesehen werden, dass die lastbasierte Signalisierung in Abhängigkeit von bestimmten Betriebsereignissen des Funk-Kommunikationssystems übertragen wird. So kann beispielsweise die lastbasierte Signalisierung in Abhängigkeit von definierten Lastzuständen für den von der Einrichtung niederer Hierarchie versorgten Bereich des Funk-Kommunikationssystems erfolgen. Es können aber auch grundsätzlich beliebige andere Betriebsereignisse definiert werden, die eine lastbasierte Signalisierung auslösen. So kann die lastbasierte Signalisierung beispielsweise auch an eine bestimmte Signalisierung innerhalb des Funk-Kommunikationssystems geknüpft werden.

Als ein Spezialfall des vorgenannten Verfahrens kann vorgesehen werden, dass die lastbasierte Signalisierung in Abhängigkeit von definierten Schwellwerten für die Lastzustände erfolgt. Es kann also bei Überschreitung oder Unterschreitung von vordefinierten Schwellwerten für definierte Lastzustände eine lastbasierte Signalisierung erfolgen. Als definierte Lastzustände können beispielsweise die bereits genannten Betriebsparameter und/oder Signalisierungsarten des Funk-Kommunikationssystems herangezogen werden wie die Nutzung physikalischer Übertragungskapazitäten, die Verwendung gewisser Modulationsarten etc.

Das erfindungsgemäße Verfahren kann grundsätzlich in allen geeigneten Arten von Funk-Kommunikationssystemen Anwendung finden, welche eine hierarchisch aufgebaute Netzarchitektur aufweisen. Besonders vorteilhaft kann das Verfahren zur Steuerung einer Übertragung von Datenpaketen in einem Paketdaten-Übertragungssystem verwendet werden.

Ein weiterer Gegenstand der vorliegenden Erfindung ist ein Funk-Kommunikationssystem mit einer hierarchischen Netzarchitektur mit Einrichtungen zur Steuerung einer Übertragung von Daten und mit Endgeräten. Dabei weist die hierarchische Netzarchitektur Einrichtungen niederer Hierarchie und mindestens eine Einrichtung höherer Hierarchie auf. Gemäß der vorliegenden Erfindung ist vorgesehen, dass mindestens eine Einrichtung niederer Hierarchie zur Übertragung einer lastbasierte Signalisierung an eine Einrichtung höherer Hierarchie ausgebildet ist und die Einrichtung höherer Hierarchie zur Steuerung von Übertragungskapazitäten der Einrichtung niederer Hierarchie basierend auf der lastbasierten Signalisierung ausgebildet ist.

Die Vorteile dieses erfindungsgemäßen Funk-Kommunikationssystems ergeben sich in analoger Weise, wie bereits für das vorgenannte erfindungsgemäße Verfahren erläutert wurde. Es können auch die einzelnen Einrichtungen des erfindungsgemäßen Funk-Kommunikationssystems derart weitergebildet und angepasst werden, dass sie zur Durchführung einzelner oder alle Schritte des vorgenannten erfindungsgemäßen Verfahrens geeignet sind.

Als Funk-Kommunikationssystem kann grundsätzlich jede geeignete Art von Funk-Kommunikationssystemen vorgesehen sein. Bevorzugt kann das Funk-Kommunikationssystem als Paket-Datenübertragungssystem ausgebildet sein.

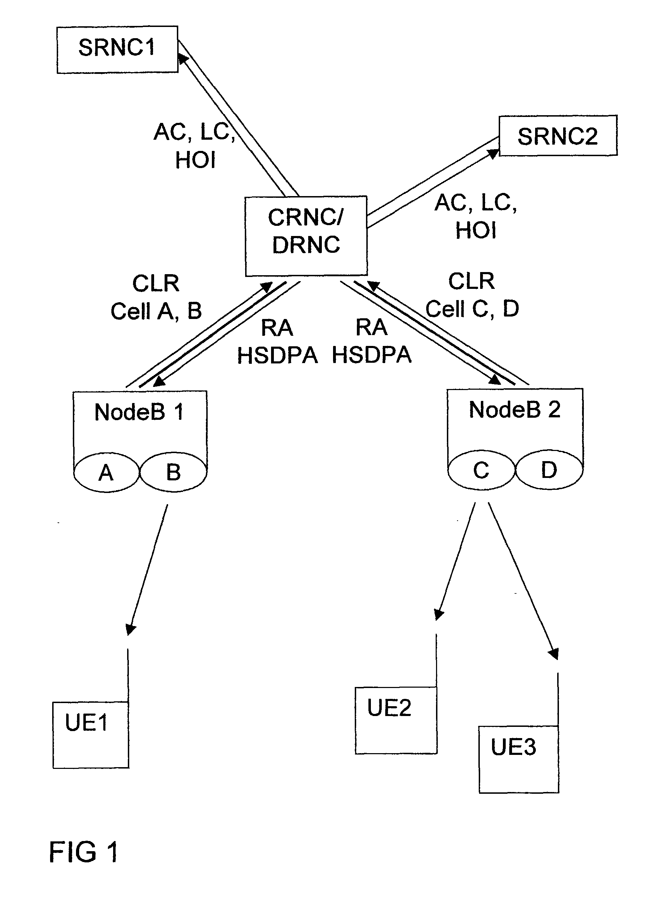

Nachfolgend wird anhand der Figur 1 ein spezielles Ausführungsbeispiel der vorliegenden Erfindung am Beispiel eines Funk-Kommunikationssystems zur Paketdatenübertragung erläutert.

Es zeigt:
- FIG 1: Schematische Darstellung eines Funk-Kommunikationssystems zur Paketdatenübertragung

FIG 1 zeigt schematisch in Form eines Blockdiagramms die wichtigsten Komponenten eines Funk-Kommunikationssystems zur Paketdatenübertragung. In der bereits eingangs erwähnten 3GPP werden grundsätzlich Verfahren spezifiziert, die eine effiziente Paketdatenübertragung an Endgeräte ermöglichen sollen. Ein Bestandteil der Verfahren ist beispielsweise eine adaptive Modulation und eine zeitlich angepasste Zuteilung (Scheduling) von physikalischen Ressourcen in einer Basisstation (im Rahmen einer Paketdatenübertragung auch bezeichnet als NodeB, vergleiche FIG 1), also in einer Einrichtung unterster Hierarchie eines Funk-Kommunikationssystems zur Paketdatenübertragung. Die Verfahren werden auch mit dem Begriff "High Speed Downlink Packet Access (HSDPA)" bezeichnet, wobei Downlink die Übertragung von Paketdaten in Abwärtsrichtung von einer Basisstation zu einem Endgerät UE (User Equipment) bezeichnet.

Es ist im Rahmen der 3GPP vorgesehen, den Verantwortungs- und Aufgabenbereich einer Basisstation NodeB im Vergleich zu üblichen Funk-Kommunikationssystemen zu erweitern. Den Basisstationen NodeB wird dabei die alleinige Verantwortung, ihnen für eine Paketdatenübertragung an Endgeräte UE zugewiesene Übertragungskapazitäten, also physikalische Ressourcen, auf gemeinsam genutzten Kanälen zu steuern. Dabei kann auch eine Signalisierung zwischen einem Endgerät UE und einer Basisstation NodeB für den Fall einer fehlerhaften Übertragung von Paketdaten erfolgen, aufgrund derer die Basisstation NodeB eine erneute Übertragung der fehlerhaft übertragenen Datenpakete durchführt. Hierzu werden von den Basisstationen NodeB Datenpakete von hierarchisch höheren Einrichtungen der Netzwerkarchitektur angefordert und in ersten Daten-Zwischenspeichern, so genannten Scheduling Queues, bis zu einer erfolgten Übertragung der Datenpakete über die Luftschnittstelle an die Endgeräte UE gespeichert. Gesendete Datenpakete werden in zweiten Datenspeichern, so genannten Retransmission Buffers, so lange gespeichert, bis ein fehlerfreier Empfang der Datenpakete von dem entsprechenden Endgerät positiv zurückbestätigt worden ist oder bis eine definierte Sendezeitdauer überschritten ist.

Eine Einrichtung höherer Hierarchie der Netzwerkarchitektur des Funk-Kommunikationssystems ist ebenfalls in FIG 1 dargestellt, nämlich ein als Vermittlungs- und Steuereinrichtung ausgebildeter Netzwerk-Knoten, ein so genannter Controlling Radio Network Controller CRNC. Dieser Netzwerk-Knoten CRNC hat insbesondere grundsätzlich die Kontrolle über Übertragungskapazitäten - also über physikalische Ressourcen - der ihm hierarchisch untergeordneten Basisstationen NodeB 1, NodeB 2. In einem Funk-Kommunikationssystem sind in der Regel eine Vielzahl solcher Netzwerk-Knoten CRNC vorgesehen, die eventuell noch weiteren Einrichtungen mit wiederum höherer Hierarchie untergeordnet sein können. Somit bilden die Netzwerk-Knoten CRNC und die mit ihnen datentechnisch verbundenen Basisstationen NodeB 1, NodeB 2 eine hierarchische Netzwerkarchitektur eines Funk-Kommunikationssystems.

Das Funk-Kommunikationssystem ist im Fall der FIG 1 als zellulares Funk-Kommunikationssystem ausgebildet. Die Basisstation NodeB 1 versorgt eine Zelle A und eine Zelle B, die Basisstation NodeB 2 versorgt eine Zelle C und eine Zelle D. Im Beispiel nach FIG 1 befindet sich gerade ein Endgerät UE1 in der Zelle B, zwei Endgeräte UE2, UE3 befinden sich in der Zelle C.

Bei den in 3GPP vorgeschlagenen Maßnahmen erhalten die Basisstationen NodeB 1, NodeB 2 die Funktionalität, die physikalischen Ressourcen für die Übertragung von Datenpaketen an Endgeräte UE 1, UE 2, UE 3 zu planen und geeignet zuzuweisen. Diese Planung und Zuweisung von Ressourcen kann die Basisstation aufgrund von Werten für die Übertragungsqualität bzw. Dienstequalität (Quality of Service QoS) für bestimmte aktuelle Anwendungen in der Zelle, aufgrund der Datenraten auf der Funkschnittstelle und/oder aufgrund der momentanen Interferenz- und Lastsituation in der jeweiligen Funkzelle durchführen. Damit werden den Basisstationen gewisse Kontrollfunktionen übertragen, die üblicherweise bei einer zentralisierten Netzwerkarchitektur (UTRAN) durch die übergeordneten Netzwerk-Knoten CRNC erfüllt werden. Dies führt zu dem Problem, dass dem hierarchisch übergeordnete Netzwerk-Knoten CRNC nur bedingt oder überhaupt keine Informationen über die aktuelle Lastsituation an den ihm untergeordneten Basisstationen NodeB 1, NodeB 2 besitzt. Damit könnte ein Netzwerk-Knoten CRNC gewisse Kontroll- und Steuerfunktionen, die auch in einer hierarchischen Netzwerkarchitektur sinnvoll wären, wie beispielsweise eine Zugangskontrolle (Admission Control) und eine Lastkontrolle (Load Control) nicht effektiv ausführen.

Die eben genannten Probleme können, wie soeben dargestellt, bei einem Funk-Kommunikationssystem zur Paketdatenübertragung auftreten, das nach dem HSDPA-Prinzip arbeitet. Grundsätzlich können jedoch vergleichbare Überlegungen auch für andere hierarchische Funk-Kommunikationssysteme gelten, wie bereits eingangs dargestellt wurde. Bei einer Nutzung des HSPDA-Prinzips in einem Funk-Kommunikationssystem zur Paketdatenübertragung ist einerseits vorgesehen, dass der CRNC beim Aufbau einer Funkverbindung zu einem Endgerät UE physikalische Ressourcen auf den von ihm verwalteten Basisstationen NodeB freigibt (Ressource Allocation für HSDPA, in FIG 1 abgekürzt als RA HSDPA). Ohne die Maßnahmen der Erfindung würde jedoch der CRNC keine Kenntnis über die tatsächliche Nutzung dieser physikalischen Ressourcen durch die Basisstationen NodeB erhalten, denn eine zeitlich angepasste Zuteilung (Scheduling) der zu übertragenden Datenpakete erfolgt in den Basisstationen NodeB. Der CRNC hätte also ohne die Maßnahmen der Erfindung keine Kontrolle über die tatsächliche Nutzung der freigegebenen Ressourcen in den ihm untergeordneten Zellen des Funk-Kommunikationssystems.

Hier kann nun die Erfindung Abhilfe schaffen. Es wird, wie in FIG 1 dargestellt, der aktuelle Lastzustand in der jeweiligen Zelle A, B, C, D von den Basisstationen NodeB 1, NodeB 2 an den CRNC übermittelt (Cell Load Reporting CLR für Cell A, B bzw. für Cell C, D). Als lastbasierte Signalisierung werden also direkt die Lastzustände in den jeweiligen Basisstationen NodeB bzw. in den jeweiligen Zellen übertragen. Dadurch wird sichergestellt, dass auch bei Anwendung von HSDPA - bzw. grundsätzlich bei vergleichbarer Problematik in hierarchischen Funk-Kommunikationssystemen - der CRNC als Einrichtung höherer Hierarchie weiterhin ausreichende Kontroll- und Steuerungsfunktionen für ihm untergeordnete Einrichtungen NodeB niederer Hierarchie ausüben kann. Solche Kontroll- und Steuerungsfunktionen können beispielsweise eine Zugangskontrolle (Admission Control AC) oder eine Lastkontrolle (Load Control LC) sein.

Die Übermittlung CLR der Lastzustände für die Zellen A, B, C, D kann beispielsweise periodisch oder ereignisgesteuert erfolgen, z.B. wenn ein bestimmter Schwellwert überschritten oder unterschritten wird. Die aktuellen Lastzustände für die Zellen A, B, C, D können als Werte übertragen werden, welche zeitliche Mittelwerte für die durchschnittliche Nutzung von Signalisierungen oder auch von physikalischen Ressourcen darstellen, welche für HSDPA zugewiesen wurden. So kann beispielsweise die durchschnittliche Nutzung der Anzahl der Code-Kanäle (Code Channels), die durchschnittliche Verwendung bestimmter Modulationsarten, die durchschnittliche Belegung von Zwischenspeichern (Scheduling Queues) oder die durchschnittliche Anzahl von Quittierungs-Signalisierungen (wie HARQ ACQ und NACK) zur Bildung der Werte für die aktuellen Lastzustände herangezogen werden.

Darüber hinaus können die übermittelten Lastinformationen aber auch vom CRNC dazu verwendet werden, einem anderen Netzknoten SRNC (Serving RNC) eine Handover-Empfehlung HOI (Handover Indication) zum Zweck der Optimierung der Lastverteilung in dem Funk-Kommunikationssystem anzuzeigen.

### Hintergrund hierfür ist folgender:

Jeder Netzknoten CRNC kann für ein bestimmtes Endgerät UE zu einem Serving RNC (SRNC) werden, wenn dieser Netzknoten der erste ist, der gewisse Kontrollfunktionen über ein bestimmtes Endgerät UE ausübt, da sich dieses Endgerät UE aktuell in dem Bereich dieses bestimmten RNC befindet. Wenn nun das Endgerät UE sich bewegt und dabei den Bereich des SRNC verlässt und in den Bereich eines anderen CRNC eintritt, so behält der SRNC weiterhin die Kontrolle über das Endgerät UE und der neue CRNC dient lediglich zur Weiterleitung der Kontrollaktionen des SRNC. Der neue CRNC wird deshalb als Drift RNC (DRNC) für diese Kontrollaktionen bezeichnet. Sollen also in einen solchen Fall einem Endgerät UE beispielsweise Ressourcen für Datenverbindungen zugewiesen werden, so kann dies der SRNC nicht mehr selbst steuern, da sich das Endgerät UE im Bereich eines DRNC befindet. Der SRNC muss dann bei dem DRNC für eine Freigabe entsprechender Ressourcen anfragen.

In FIG 1 sind zwei SRNC dargestellt. Es sei SRNC1 für eine Kontrolle des Endgerätes UE1 und SRNC2 für eine Kontrolle der Endgeräte UE2, UE3 zuständig. Die Endgeräte UE1, UE2, UE3 befinden sich aber mittlerweile im Bereich des ebenfalls in Figur 1 dargestellten CRNC, der nun für die Endgeräte UE1, UE2, UE3 und für die SRNC1 und SRNC2 als DRNC agiert und die physikalischen Ressourcen der ihm zugeordneten NodeBs verwaltet. Der als DRNC agierende CRNC kann aber aufgrund seiner Kenntnisse über die Lastverhältnisse in den Zellen A, B, C, D bzw. an den NodeB 1 und NodeB 2 jeweils den SRNC1 und SRNC2 Empfehlungen übermitteln wie beispielsweise Handover-Empfehlungen HOI (Handover Indication).

In HSDPA ist vorgesehen, dass die letztliche Handover-Entscheidungen von dem entsprechenden SRNC getroffen wird. Grundsätzlich werden Handover-Entscheidungen auf Basis der Übertragungsqualität für eine Funkverbindung zu einem Endgerät UE getroffen. Die lastbasierte Handover-Entscheidung bietet hier eine weitere Möglichkeit zur Optimierung des Betriebes eines Funk-Kommunikationssystems und ist selbstverständlich auch in anderen Arten von hierarchischen Funk-Kommunikationssystemen anwendbar. Es wird damit also eine zusätzliche Möglichkeit geschaffen, eine Funkverbindung (Serving Highspeed Downlink Shared Channel HS-DSCH Radio Link) von einer ersten Zelle in eine zweite Zelle zu verlegen.

So kann also im Beispiel von FIG 1 der CRNC auf Basis von übermittelten Lastinformationen CLR der Basisstation NodeB 2 dem SRNC2 eine Handover-Empfehlung HOI senden, aufgrund derer ein Handover der Funkverbindung zu dem Endgerät UE3 von der Zelle C in die Zelle D erfolgen kann, wenn in der Zelle C die durchschnittliche Nutzung gewisser Ressourcen einen definierten Schwellwert überschreitet. Als eine weitere Voraussetzung für die Durchführung eines solchen Handovers wird sinnvollerweise vorgesehen, dass dieser nur erfolgt, wenn in der neuen Zelle, hier in der Zelle D, auch ausreichende Empfangsbedingungen für das Endgerät UE3 vorliegen. Weiterhin kann auch der CRNC auf Basis der ihm bekannten Lastinformationen von anderen Einrichtungen des Funk-Kommunikationssystems gewünschte Handover ablehnen oder annehmen, wenn dies der Optimierung der Lastsituation im Funk-Kommunikationssystem dient.

Durch die Erfindung können also insbesondere folgende Funktionalitäten des CRNC unterstützt werden:
- eine dynamische Anpassung der zugewiesene Ressourcen für eine Übertragung von Datenpaketen mit HSDPA, beispielsweise eine Verringerung oder Erhöhung der Anzahl von Codes (Channelisation Codes), die für die Übertragung verwendet werden,
- Annehmen oder Ablehnen von eingehenden Paketdatenübertragungs-Verbindungen
- Annehmen oder Ablehnen eines Handovers
- Übermittlung von Handover-Empfehlungen an SRNCs zur Optimierung der Lastsituation bzw. der Nutzung der physikalischen Ressourcen in den vom CRNC verwalteten Zellen.

## Patentansprüche

1. Verfahren zur Steuerung einer Übertragung von Daten in einem Funk-Kommunikationssystem mit einer hierarchischen Netzarchitektur,
**dadurch gekennzeichnet,**
**dass** eine Einrichtung (NodeB 1, NodeB 2) niederer Hierarchie der hierarchischen Netzarchitektur eine lastbasierte Signalisierung (CLR) an eine Einrichtung (CRNC) höherer Hierarchie der hierarchischen Netzarchitektur überträgt, und die Einrichtung (CRNC) höherer Hierarchie basierend auf der lastbasierten Signalisierung (CLR) eine Steuerung (RA) von Übertragungskapazitäten der Einrichtung (NodeB 1, NodeB 2) niederer Hierarchie durchführt.

2. Verfahren nach Anspruch 1,
**dadurch gekennzeichnet,**
**dass** als lastbasierte Signalisierung (CLR) Informationen über die Lastzustände für den von der Einrichtung (NodeB 1, NodeB 2) niederer Hierarchie versorgten Bereich des Funk-Kommunikationssystems übertragen werden.

3. Verfahren nach Anspruch 2,
**dadurch gekennzeichnet,**
**dass** als Informationen (CLR) über die Lastzustände zeitlich gemittelte Lastwerte für definierte Betriebsparameter und/oder Signalisierungsarten des Funk-Kommunikationssystems für Funk-Verbindungen zwischen einer Einrichtung (NodeB 1, NodeB 2) niedrigster Hierarchie und Endgeräten (UE1, UE2, UE3) übertragen werden.

4. Verfahren nach einem der Ansprüche 1 bis 3,
**dadurch gekennzeichnet,**
**dass** auf Basis der lastbasierten Signalisierung (CLR) eine Überprüfung einer Zuordnung von Endgeräten (UE1, UE2, UE3) zu bestimmten Einrichtungen (NodeB 1, NodeB 2) niedrigster Hierarchie erfolgt.

5. Verfahren nach Anspruch 4,
**dadurch gekennzeichnet,**
**dass** als Funk-Kommunikationssystem ein zellulares Funk-Kommunikationssystem vorgesehen ist und auf Basis der lastbasierten Signalisierung (CLR) eine Prüfung einer Handover-Möglichkeit für mindestens ein Endgerät (UE1, UE2, UE3) von einer ersten Zelle (A, B, C, D) des Funk-Netzes in eine zweite Zelle (A, B, C, D) des Funk-Kommunikationssystems erfolgt.

6. Verfahren nach einem der Ansprüche 1 bis 5,
**dadurch gekennzeichnet,**
**dass** die lastbasierte Signalisierung (CLR) in Abhängigkeit von bestimmten Zeitereignissen übertragen wird.

7. Verfahren nach Anspruch 6,
**dadurch gekennzeichnet,**
**dass** die lastbasierte Signalisierung (CLR) periodisch übertragen wird.

8. Verfahren nach einem der Ansprüche 1 bis 5,
**dadurch gekennzeichnet,**
**dass** die lastbasierte Signalisierung (CLR) in Abhängigkeit von bestimmten Betriebsereignissen des Funk-Kommunikationssystems übertragen wird.

9. Verfahren nach Anspruch 8,
**dadurch gekennzeichnet,**
**dass** die lastbasierte Signalisierung (CLR) in Abhängigkeit von definierten Lastzuständen für den von der Einrichtung (NodeB 1, NodeB 2) niederer Hierarchie versorgten Bereich des Funk-Kommunikationssystems erfolgt.

10. Verfahren nach Anspruch 9,
**dadurch gekennzeichnet,**
**dass** die lastbasierte Signalisierung (CLR) in Abhängigkeit von definierten Schwellwerten für die Lastzustände erfolgt.

11. Verfahren nach einem der Ansprüche 1 bis 10,
**dadurch gekennzeichnet,**
**dass** eine Steuerung einer Übertragung von Datenpaketen in einem Paketdaten-Übertragungssystem erfolgt.

12. Funk-Kommunikationssystem mit einer hierarchischen Netzarchitektur mit Einrichtungen (CRNC, SRNC1, SRNC2) zur Steuerung einer Übertragung von Daten, wobei die hierarchische Netzarchitektur Einrichtungen (NodeB 1, NodeB 2) niederer Hierarchie und mindestens eine Einrichtung (CRNC) höherer Hierarchie aufweist,
**dadurch gekennzeichnet,**
**dass** mindestens eine Einrichtung (NodeB 1, NodeB 2) niederer Hierarchie zur Übertragung einer lastbasierte Signalisierung (CLR) an eine Einrichtung höherer Hierarchie ausgebildet ist und die Einrichtung (CRNC) höherer Hierarchie zur Steuerung von Übertragungskapazitäten der Einrichtung (NodeB 1, NodeB 2) niederer Hierarchie basierend auf der lastbasierten Signalisierung (CLR) ausgebildet ist.

13. Funk-Kommunikationssystem nach Anspruch 12, ausgebildet als Paket-Datenübertragungssystem.
